Europäisches Patentamt

European Patent Office

Office européen des brevets

(19)

(11) Veröffentlichungsnummer: **0 102 409**
**B1**

(12)

# EUROPÄISCHE PATENTSCHRIFT

(45) Veröffentlichungstag der Patentschrift:
**07.01.87**

(51) Int. Cl.⁴: **G 01 N  25/08,** H 05 B  3/78

(21) Anmeldenummer: **82108174.2**

(22) Anmeldetag: **04.09.82**

(54) Verfahren und Vorrichtung zur Überprüfung von hygroskopischen Flüssigkeiten auf ihren Siedepunkt.

(43) Veröffentlichungstag der Anmeldung:
**14.03.84 Patentblatt 84/11**

(45) Bekanntmachung des Hinweises auf die Patenterteilung:
**07.01.87 Patentblatt 87/2**

(84) Benannte Vertragsstaaten:
**AT CH DE LI**

(56) Entgegenhaltungen:
**EP - A - 0 056 424**
**DE - A - 1 573 278**
**DE - A - 2 364 654**
**DE - A - 2 658 215**
**DE - A - 2 721 232**
**DE - A - 2 844 513**

(73) Patentinhaber: **FAG KUGELFISCHER GEORG SCHÄFER Kommanditgesellschaft auf Aktien,
Georg-Schäfer-Strasse 30 Postfach 1260,
D-8720 Schweinfurt (DE)**

(72) Erfinder: **Spielmann, Norbert, Dipl.-Ing., Alter Hohlweg 7,
D-8603 Ebern (DE)**
Erfinder: **Hager, Günter, Dipl.-Ing., Gräfenholz 6,
D-8601 Rentweinsdorf (DE)**
Erfinder: **Adam, Herbert, Dipl.-Ing., Sandweg 1,
D-8722 Obereuerheim (DE)**

(74) Vertreter: **Rehmann, Klaus H. et al, Postfach 1260 (FAG)
Hauptbahnhofstrasse, D-8720 Schweinfurt (DE)**

## Beschreibung

Hygroskopische Flüssigkeiten, insbesondere Bremsflüssigkeit, nehmen bekanntlich Luftfeuchtigkeit (Wasser) auf. Dadurch verringert sich der Siedepunkt, so dass sich bei langen Bremsphasen Dampfblasen bilden können, welche die Funktion der Bremsanlage gefährden.

Man hat deshalb Bremsflüssigkeitstestgeräte entwickelt (s. z.B. Der Maschinenschaden, 53 (1980), Heft 6, S. 248), um den Siedepunkt der Bremsflüssigkeit zu ermitteln. Dazu wird mit Hilfe einer kleinen Saugspritze Bremsflüssigkeit aus dem Vorratsbehälter entnommen und in eine zu verschliessende Kammer eines Bremsflüssigkeitstesters übertragen, wo die Bremsflüssigkeit bis zum Sieden erhitzt wird. Der Siedepunkt wird dabei in der Weise festgestellt, dass bei der Bildung von Dampfblasen ein in einem U-förmigen Rohr befindlicher Teil der Bremsflüssigkeit in einen Auffangbehälter gedrückt wird, wodurch der Messvorgang automatisch beendet und die Temperatur angezeigt wird (nähere Einzelheiten s. DE-A1-27 21 232). Die Skala des Temperaturmessgerätes ist in 3 farblich abgegrenzte Bereiche eingeteilt, nämlich

rot = Gefahrenbereich – Bremsflüssigkeit muss sofort gewechselt werden

gelb = Grenzbereich – Bremsflüssigkeit muss demnächst gewechselt werden

grün = Zulässigkeitsbereich – Bremsflüssigkeit muss nicht gewechselt werden.

Dieses Verfahren und die entsprechende Vorrichtung sind jedoch sehr aufwendig und teuer. Darüberhinaus sind sie nur unter labormässigen Bedingungen durchführbar und daher für den Werkstatteinsatz nicht brauchbar.

Aus der EP-A1-56 424 ist ein Verfahren und eine Vorrichtung zur Bestimmung des Siedepunktes von Bremsflüssigkeit bekannt, bei der eine Messsonde in die Bremsflüssigkeit eingetaucht und erhitzt wird, wobei die Temperatur und die Temperaturänderung gemessen und diese Werte einer Anzeige- und Auswerteelektronik zugeführt werden. Wenn die Bremsflüssigkeit zu sieden beginnt, bilden sich im Bereich des Heizelements, das gleichzeitig Temperaturfühler ist, Dampfblasen, wodurch sich die Wärmeleitfähigkeit ändert. Diese Änderung der zeitlichen Temperaturänderung dt wird von der Auswerteelektronik festgestellt, die Temperatur festgehalten und zur Bestimmung des Siedepunktes der Bremsflüssigkeit verwendet.

Nachteilig dabei ist der relativ grosse Aufwand, den die Anzeige- und Auswerteelektronik erfordert.

Es ist deshalb Aufgabe der Erfindung, ein Verfahren und eine Vorrichtung zur Überprüfung von hygroskopischen Flüssigkeiten, vorzugsweise von Bremsflüssigkeiten, auf ihren Siedepunkt aufzuzeigen, das einfach auch in der Werkstatt durchzuführen ist und mit einer preiswerten Vorrichtung vorgenommen werden kann.

Die Lösung dieser Aufgabe ist aus den Ansprüchen 1 und 3 zu entnehmen. Die Erfindung soll an Hand der Figuren näher erläutert werden.

Fig. 1 zeigt eine Vorrichtung, die nach dem Stechheberprinzip arbeitet.

Fig. 2 zeigt eine Vorrichtung, bei der die Dampfblasenbildung über einen Stab aus lichtleitendem Material beobachtbar ist.

Fig. 3 ein Schaltschema für 3 nebeneinanderliegende Heizelemente.

Fig. 4 eine Vorrichtung, bei der Heizelemente nacheinander in die Bremsflüssigkeit getaucht werden.

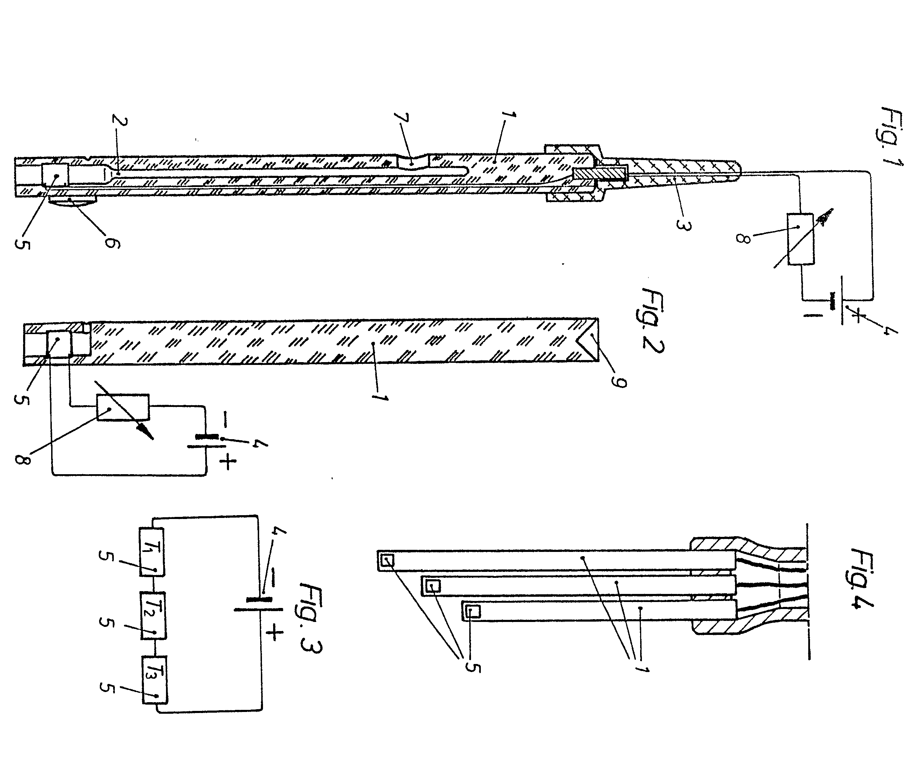

Die Vorrichtung nach Fig. 1 besteht aus einem durchsichtigen Stab 1, der mit einer Bohrung 2 versehen ist. An seinem oberen Ende ist er mit einem Stecker 3 versehen, der zum Anschluss an eine elektrische Energieversorgung 4 dient. Am unteren Ende befindet sich über eine elektrische Leitung mit dem Stecker verbunden ein Heizelement 5, das auf eine vorgebbare Temperatur einstellbar ist.

Bei dieser Ausführung ist im Bereich des Heizelementes noch eine Lupe am Stab angeordnet, die das Beobachten der Dampfblasen erleichtert. Die Bohrung im Stab endet in einer radial verlaufenden Öffnung 7, die, wenn sie z.B. von einem Finger verschlossen wird, das Entnehmen von Bremsflüssigkeit aus dem Vorratsbehälter nach Art eines Stechhebers gestattet.

Mit dieser Vorrichtung wird das Verfahren zum Prüfen der Bremsflüssigkeit auf ihren Siedepunkt folgendermassen durchgeführt: zunächst wird der Stab von Hand in den Vorratsbehälter, in dem sich Bremsflüssigkeit befindet, eingetaucht, wodurch sich die Bohrung 2 ebenfalls mit Bremsflüssigkeit füllt. Dann wird die radiale Öffnung 7 z.B. mit einem Finger zugehalten und der Stab 1 wieder herausgenommen. Wie bei einem Stechheber verbleibt eine gewisse Menge der Bremsflüssigkeit in der Bohrung 2. Nun wird der Stab 1 über den Stecker 3 an eine elektrische Energiequelle 4 angeschlossen und das Heizelement 5 wird auf eine vorgegebene Temperatur z.B. 200 °C erhitzt. Der Beobachter kann dabei, durch die Lupe 6 vergrössert, nach kurzer Zeit feststellen, ob sich am Heizelement 5 Dampfblasen bilden oder nicht.

Bilden sich keine Dampfblasen, so kann über einen regelbaren Widerstand 8 die Temperatur des Heizelementes z.B. auf 250 °C erhöht werden bzw. auf z.B. 150 °C erniedrigt werden, falls sich bei 200 °C bereits Dampfblasen gebildet haben. Auf diese Weise lässt sich einfach der Siedepunkt der Bremsflüssigkeit feststellen, und es kann entschieden werden, ob die Bremsflüssigkeit gewechselt werden muss oder nicht. Nachdem die Siedetemperatur festgestellt wurde, wird der Finger von der radialen Öffnung 7 genommen und die Bremsflüssigkeit läuft aus. Nach dem Ausspülen der Bohrung ist die Vorrichtung für eine neue Prüfung bereit. Verfälschungen des Messergebnisses durch Rückstände lassen sich so leicht vermeiden. Natürlich kann der Stab 1 auch bereits mit der Energiequelle 4 verbunden und auf die gewünschte Temperatur aufgeheizt sein, ehe er in den Vorratsbehälter eingetaucht wird. Nach dem prinzipiell gleichen Verfahren wird die Bremsflüssigkeit mit einer Vorrichtung nach Fig. 2 geprüft. Dabei ist im unteren Ende eines aus lichtleitendem Material (Glas, Kunststoff) bestehenden Stabes 1 ebenfalls ein Heizelement 5 angeordnet, das ring- oder palettenförmig ausgebildet sein kann und über elektrische Leitungen und einem regelbaren Widerstand 8 mit einer Stromquelle 4 verbunden ist. Der Glasstab 1 ist an seinem oberen Ende mit einem Kegelprisma 9 versehen. Wenn nun nach dem Eintauchen in die Bremsflüssigkeit und dem Erhitzen des Heizelementes 5 sich Dampfblasen bilden, so kann das am oberen Ende des Glasstabes 1 beobachtet werden.

In Fig. 3 ist ein Schaltschema dargestellt, bei dem drei Heizelemente 5 nebeneinander angeordnet sind. Jedes Heizelement 5 ist auf eine andere Temperatur aufheizbar, so dass beim Eintauchen in die Bremsflüssigkeit beobachtet wird, an welchem der Heizelemente 5 sich Blasen bilden. Dabei können die Heizelemente 5 farblich unterschiedlich ausgeführt sein, grün, gelb oder rot, so dass auch für jeden Laien gleich erkennbar ist, ob die Bremsflüssigkeit gewechselt werden muss.

In Fig. 4 sind die Heizelemente 5 ähnlich wie im Schema nach Fig. 3 geschaltet, aber in einem Bündel angeordnet, wobei die Stäbe 1 unterschiedlich lang ausgeführt sind. Der längste Stab ist dabei z.B. auf eine Temperatur von 150 °C, der zweitlängste auf 200 °C und der kurze auf 250 °C aufheizbar. Auch bei dieser Ausführung kann eine farbliche Kennzeichnung erfolgen, so dass der Zulässigkeits-Grenz- oder Gefahrenbereich leicht festgestellt werden kann, je nach dem, an welchem Heizelement sich Dampfblasen bilden.

## Patentansprüche

1. Verfahren zur Überprüfung von hygroskopischen Flüssigkeiten auf ihren Siedepunkt, bei dem mindestens ein Heizelement, das sich in einem Hohlraum befindet, in die Flüssigkeit eingetaucht wird, wobei sich der Hohlraum mit Flüssigkeit füllt, dadurch gekennzeichnet, dass das Heizelement (5) auf eine vorgebbare Temperatur erhitzt wird und dass beobachtet wird, ob sich bei Erreichen der vorgegebenen Temperatur am Heizelement (5) Dampfblasen bilden.

2. Verfahren nach Anspruch 1, dadurch gekennzeichnet, dass mehrere Heizelemente (5) mit jeweils unterschiedlicher Temperatur in die Flüssigkeit eingetaucht werden und beobachtet wird, ob und an welchen Heizelementen (5) sich Dampfblasen bilden.

3. Vorrichtung zur Überprüfung von hygroskopischen Flüssigkeiten auf ihren Siedepunkt mit mindestens einem Heizelement (5), das sich in einem beim Eintauchen in die Flüssigkeit mit dieser füllenden Hohlraum befindet, dadurch gekennzeichnet, dass das Heizelement (5) auf eine vorgebbare Temperatur erhitzbar ist und aus gut wärmeleitendem Material besteht und dass der Hohlraum von lichtdurchlässigem Material umgeben ist.

4. Vorrichtung nach Anspruch 3, dadurch gekennzeichnet, dass das Heizelement (5) elektrisch aufgeheizt wird, wobei die Temperatur einstellbar ist.

5. Vorrichtung nach Anspruch 4, dadurch gekennzeichnet, dass mehrere unterschiedliche Temperatur aufweisende Heizelemente (5) derart nebeneinander angeordnet sind, dass sie bei der Messung gleichzeitig in die Flüssigkeit eintauchen.

6. Vorrichtung nach Anspruch 4, dadurch gekennzeichnet, dass mehrere unterschiedliche Temperaturen aufweisende Heizelemente (5) derart hintereinander angeordnet sind, dass sie bei der Messung nacheinander in die Flüssigkeit eintauchen.

7. Vorrichtung nach Anspruch 3, dadurch gekennzeichnet, dass das Heizelement (5) in einem Stab (1) angeordnet ist, der nach dem Prinzip eines Stechhebers ausgebildet ist, so dass nach dem Eintauchen in die Flüssigkeit eine vorgegebene Menge der Flüssigkeit erhitzt wird.

8. Vorrichtung nach Anspruch 7, dadurch gekennzeichnet, dass am Stab (1) im Bereich des Heizelements (5) eine Vergrösserungseinrichtung (6) angeordnet ist.

9. Vorrichtung nach Anspruch 3, dadurch gekennzeichnet, dass das Heizelement (5) in einem Ende des Stabes (1) aus lichtleitendem Material angeordnet ist, welcher an seinem anderen Ende mit einem Prisma (9) versehen ist, so dass die Blasenbildung am Heizelement (5) am anderen Ende des Stabes beobachtbar ist.

## Revendications

1. Procédé pour le contrôle du point d'ébullition de liquides hygroscopiques où au moins 1 élément de chauffage, se trouvant dans une chambre servant à la pénétration du liquide, est plongé dans le liquide et caractérisé en ce que l'élément de chauffage (5) est porté à une température donnée et que l'on peut remarquer s'il se forme des bulles de vapeur à l'élément de chauffage (5) dès que cette température a été atteinte.

2. Procédé selon revendication 1, caractérisé en ce que plusieurs éléments de chauffage (5) de températures différentes sont immergés dans le liquide et que l'on peut remarquer s'il se forme des bulles de vapeur aux éléments de chauffage (5) et si oui sur lesquels.

3. Appareil pour le contrôle du point d'ébullition de liquides hygroscopiques comprenant au moins un élément de chauffage (5) se trouvant dans une chambre servant à la pénétration du liquide et caractérisé en ce que l'élément de chauffage (5) peut être porté à une température donnée et est constitué par un matériau à bonne conduction de chaleur et que la chambre est entourée d'un matériau transparent.

4. Appareil selon revendication 3, caractérisé en ce que l'élément de chauffage (5) est électriquement chauffé et que la température peut être réglée.

5. Appareil selon revendication 4, caractérisé en ce que plusieurs éléments de chauffage (5) de températures différentes sont disposés les uns à côté des autres de façon à ce qu'ils puissent, lors de la mesure, plonger en même temps dans le liquide.

6. Appareil selon revendication 4, caractérisé en ce que plusieurs éléments de chauffage (5) de températures différentes sont disposés les uns derrière les autres de façon à ce qu'ils puissent, lors de la mesure, plonger les uns après les autres dans le liquide.

7. Appareil selon revendication 3, caractérisé en ce que l'élément de chauffage (5) est disposé dans une barre (1) formée suivant le principe d'une pipette de façon à ce qu'après l'immersion dans le liquide une certaine quantité de liquide soit chauffée.

8. Appareil selon revendication 7, caractérisé en ce qu'un dispositif d'aggrandissement (6) est disposé sur la barre (1) au voisinage de l'élément de chauffage (5).

9. Appareil selon revendication 3, caractérisé en ce que l'élément de chauffage (5) est disposé à l'extrémité de la barre (1) en matériau transparent, qui est équipée à l'autre extrémité d'un prisme (9) de façon à ce que l'on puisse remarquer la formation de bulles à l'élément de chauffage à l'autre extrémité de la barre.

## Claims

1. Procedure for checking the boiling point of hygroscopic liquids where at least one heating element in the hollow space is immersed into the liquid and the hollow space is filled with liquid characterized by the fact that the heating element (5) is heated to a defined temperature and that one can ascertain whether steam bubbles are formed when the set temperature is reached.

2. Procedure according to claim 1, characterized by the fact, that several heating elements (5) for different temperatures are immersed into the liquid and that one can ascertain on which heating elements (5) steam bubbles are formed.

3. Device for inspecting the boiling point of hygroscopic liquids where at least one heating element (5) in the hollow space is immersed into the liquid and the hollow space is filled with this liquid characterized by the fact, that the heating element (5) can be heated to a specific temperature and consists of a material with good heat-conducting properties and that the hollow space is surrounded by transparent material.

4. Device according to claim 3, characterized by the fact, that the heating element (5) is electrically heated and the temperature is adjustable.

5. Device according to claim 4, characterized by the fact, that several heating elements (5) for different temperatures are arranged beside one another in such a way that they are immersed simultaneously into the liquid when measuring.

6. Device according to claim 4, characterized by the fact, that several heating elements (5) for different temperatures are arranged behind one another in such a way that they are immersed consecutively when taking measurements.

7. Device according to claim 3, characterized by the fact, that the heating element (5) is arranged in a bar (1) formed according to the principle of a pipette so that after immersion into the liquid a specified quantity of liquid is heated.

8. Device according to claim 7, characterized by the fact, that a magnifying appliance (6) is arranged at the bar (1) in the heating element range.

9. Device according to claim 3, characterized by the fact, that the heating element (5) is arranged in one end of the bar made of transparent material and equipped with a prism (9) on the other end so that bubble formation can be observed from the other end of the bar.

1/1

**Fig. 1**

**Fig. 2**

**Fig. 4**

**Fig. 3**